# EUROPEAN PATENT SPECIFICATION

(11) **EP 0 818 914 B1**
(45) Date of publication and mention of the grant of the patent: **17.11.2004**
(21) Application number: 97110494.8
(22) Date of filing: 26.06.1997
(51) Int. Cl.: H04M 11/02

(54) **Two-wire building intercommunication system**
Zweidraht-Gebäudeinterkommunikationssystem
Système d'interphone avec deux fils utilisé dans un bâtiment

(30) Priority: 10.07.1996 IT TO960588
(43) Date of publication of application: 14.01.1998
(73) Proprietor: Urmet Domus S.p.A., 10154 Torino (IT)
(72) Inventor: Mondardini, Massimo, 10123 Torino (IT)
(74) Representative: Modiano, Guido, Dr.-Ing.

(56) References cited:
- EP-A- 0 424 273
- WO-A-92/13418

## Description

The present invention relates to a building intercommunication or intercom system comprising at least one calling station, referenced to as "outdoor station" in the present description for the sake of brevity, and a plurality of indoor stations, and wherein each outdoor station includes at least one keyboard, or dedicated buttons for selecting individual indoor stations, transducers for transceiving the audio signal, and an actuator for an electric lock, and each indoor station includes at least one handset, a call transducer, and a button for operating the electric lock.

More specifically, the invention relates to a system of the specified type, wherein the individual indoor stations are selected by means of coded pulses, typically in digital form.

In conventional systems of the specified type, the connection between the outdoor station and the individual indoor stations is generally provided by two audio conductors, a power supply conductor, a common ground, and a common data transmission conductor that acts as a bidirectional bus for transmitting the calling codes from the outdoor station to the indoor stations and the code for activating the electric lock, which is sent by the indoor stations to the outdoor station.

It is however known to also connect the outdoor station to the indoor stations through only two conductors and by interposition of single selection terminal units associated to each indoor station; a system of this type is described in WO 92/13418. In both cases, the individual indoor stations, or intercom sets, are selected by a coded calling pulse produced by a generator-encoder that is associated with the outdoor station and the electric lock is activated by a corresponding coded pulse generated by the individual indoor stations.

The selection signal is decoded in one of the following manners: by means of the terminal units consisting of individual detectors, each of which is associated with each intercom set; by means of individual detectors, each whereof is associated with each intercom set; by means of a plurality of multiple detectors, each whereof handles a group of intercom sets. In the case of individual detectors, said detectors are constituted by window circuits adapted to recognize their own code and reject the others. In the case of multiple detectors, said detectors are constituted by decoding units, each provided with a microprocessor that bidirectionally enables a group of intercom sets by means of respective audio interfaces, a call transducer, and an electric lock; a memory is operatively connected to the microprocessor and contains the identification codes of each intercom set of said group.

These conventional systems have several drawbacks, the main ones being the considerable complexity in installation and circuitry that arises from the multiple-wire connection between the outdoor station and the indoor stations and the considerable structural complication in the case of the two conductor systems that arises essentially from the decoding systems.

In particular, the system with individual terminal units associated with each intercom set in fact considerably complicates the circuit structure of the set itself, penalizing the costs of the system; the system with multiple detectors with decoding units and corresponding interfaces is also economically disadvantageous owing to the high intrinsic cost of each unit, complicates the installation procedure, and makes the system rigid, in that the connection of additional intercom sets is troublesome.

EP-A-0 424 273 discloses a building intercommunication system having substantially the features of the preamble of claim 1.

WO 92/13418 discloses a building intercommunication system using onyl two wires to for interconnecting several distinct units.

The aim of the present invention is substantially to eliminate these and other drawbacks, and within the scope of this general aim it has the following particular objects:
-- to provide a building intercommunication system that is greatly simplified from the circuital viewpoint, is simple to install, and particularly does not require any programming on the individual intercom sets;
-- to provide a system in which the calling code is of the "physical" type, for example with four digits, wherein the first two digits designate the floor of the building and the second two designate the apartment of the respective floor;
-- to provide a building intercommunication system that is completely insensitive to short circuits in the apartments but is sensitive to any short circuits on the wires of the intercom line and is adapted to report this event, can be easily expanded, provides confidential communication and electric lock opening, is economically advantageous, and highly reliable in operation.

According to the present invention, this aim and other important objects are achieved with a building intercom system having the specific characteristics stated in the appended claims.

Substantially, the invention is based on the concept of connecting the outdoor station and the indoor stations, or intercom sets, by means of a line with just two wires and with the interposition of junction boxes, each whereof handles a corresponding group of intercom sets associated therewith, and of giving said line the role of a bidirectional bus over which the following elements travel: the power supply for all the devices connected to said bus, the digital data related to the intercom set to be selected, the ring tone, the two talk/listen audio signals simultaneously, and the control of the electric lock.

For this purpose, each junction box includes a microprocessor that handles the main functions and a group of transistors which are activated selectively by said microprocessor and connect to the two-wire bus the respective intercom set of the corresponding group of intercom sets that is associated with said junction box. Each intercom set is identified by a "physical" numeric code, for example a four-digit code, having the general format "PP CC", where "PP" indicates the building floor whereon the junction box associated with the specific intercom set is installed and "CC" indicates which terminals of the box said intercom set is physically connected to; furthermore, each junction box is coded by means of respective DIP switches (programming switches) that are included in said boxes.

In the standby configuration of the system, all the microprocessors of the junction boxes are in the "stop mode" (inhibited) state. When a call is placed from the outdoor station by entering the code of an intercom set on an appropriate keyboard, the data, sent in digital form, activate the microprocessors, which all switch to the "run" (operational) state and compare the entered data with the data set by means of said DIP switches.

As a consequence of the comparison, only the microprocessor of the junction box involved in the connection remains in the run state in order to select the intercom set, whilst all the others return to the stop mode state.

Further characteristics and advantages of the system according to the present invention will become apparent from the following detailed description and with reference to the accompanying drawings, provided by way of non-limitative example and wherein:
figure 1 is a general block diagram of the system;
figure 2 is a block diagram that illustrates in detail the circuit structure of the outdoor station and of the junction boxes and the connection method that uses a two-wire bus;
figure 3 is a block diagram that shows in detail the actuation circuit of the electric lock on the side of each individual intercom set.

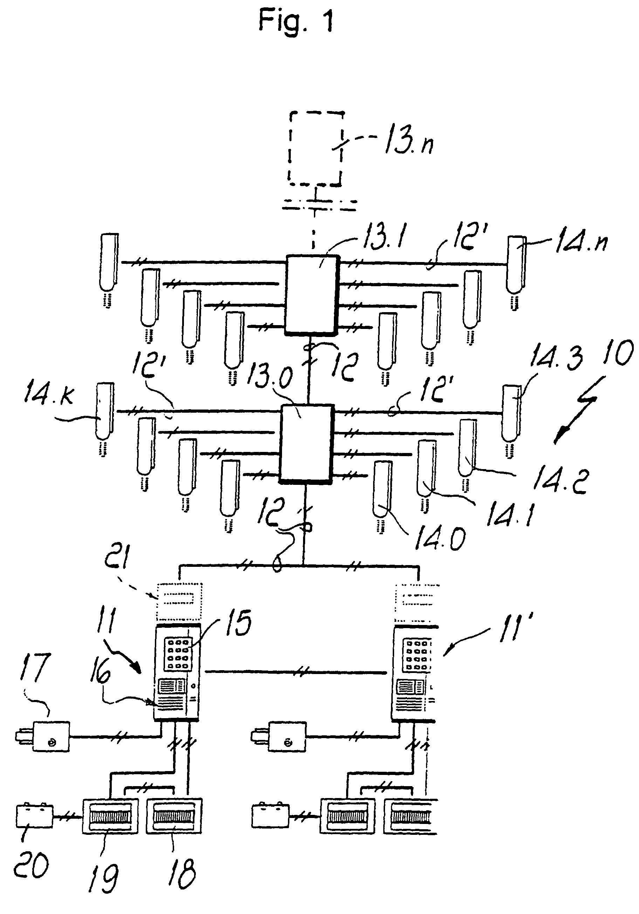

Initially with reference to figure 1, the reference numeral 10 generally designates the system according to the invention, which comprises at least one outdoor station 11 - - two outdoor stations 11-11', connected in parallel and provided with automatic switching, are shown in the illustrated example --, a line 12 with just two wires acting as a bidirectional bus, a plurality of junction boxes 13.0, 13.1, etc., and a plurality of indoor stations constituted by groups G.0, G.1 etc. of intercom sets 14.0, 14.1, etc.

Each group G.k is formed by a preset number of intercom sets 14, for example eight sets, all of which are connected to a corresponding junction box 13.k by means of respective junction lines 12' that also have just two wires and act as a bidirectional bus.

Each outdoor station is substantially provided with a selection keyboard 15 or, as an alternative, with dedicated buttons, with an audio signal transceiver unit 16, with an electric lock 17, with a main power supply 18 and a backup power supply 19 with a corresponding battery 20, and with an optional data display designated by the reference numeral 21.

Each intercom set 14 is identified, in the system, by a corresponding four-digit numeric code of the so-called physical type in the format PPCC, where PP indicates the floor of the building where the junction box 13 involved in the selection is installed and CC indicates the terminals of the boxes to which the selected intercom set is physically connected.

It is possible to install one or more junction boxes for each floor of the building, typically two junction boxes, for example for handling eight or respectively sixteen intercom sets.

By way of example, if a single junction box 13 is installed on each floor of the building, the first intercom set of the first floor is designated by the code "0001", where "00" indicates the floor and "01" indicates the position of the terminals for the physical wiring of the first intercom set to the corresponding box 13; the third intercom set of the fifth floor is identified by the code "0503", and so forth.

The junction boxes are programmed by setting a plurality of DIP switches (programming switches having "0" and "1" positions) provided in each box 13; said plurality of DIP switches -- which constitutes a physical programming system that is well-known to those skilled in the art -- is not illustrated in the figures.

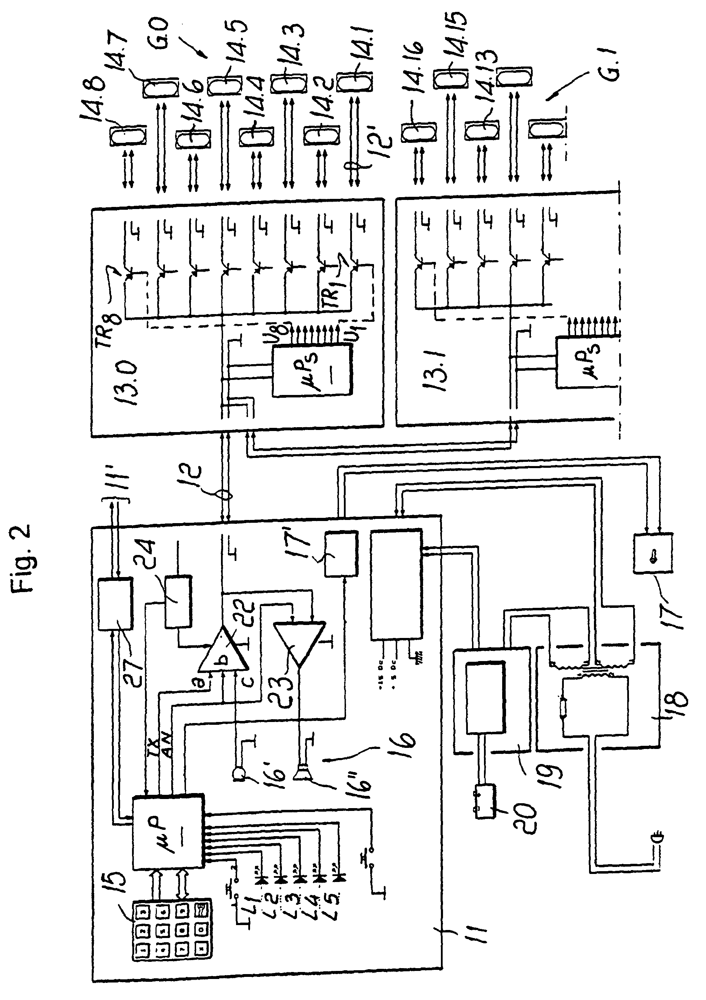

With reference now to figure 2, it is noted that each outdoor station 11 is provided with a microprocessor µP that is operatively connected to the selection keyboard 15 and to a first operational amplifier 22, the output whereof is connected to one of the two wires of the bus 12; the second wire of the bus is connected to the ground.

According to the invention, the bus 12 has the following functions:
supplying power to all the devices that are connected thereto; transmitting the data for selecting the individual intercom sets 14; sending the call tone; simultaneously transmitting the talk/listen audio data; and operating the electric lock 17. For this purpose, the amplifier 22 receives, from the microprocessor µP, on one of its own inputs "a", the selection data Tx, which are modulated in "on-off" digital form, and receives the A.N. call tone on another input "b". A third input "c" of the amplifier 22 is connected to the microphone cartridge 16' of the transceiver unit 16, from which it receives the audio signals that said amplifier transmits, by means of the bus 12, to the selected intercom set 14. A second amplifier 23 is provided to receive the audio signals originating from said selected intercom set 14 and to send them amplified to the speaker 16'' of the unit 16.

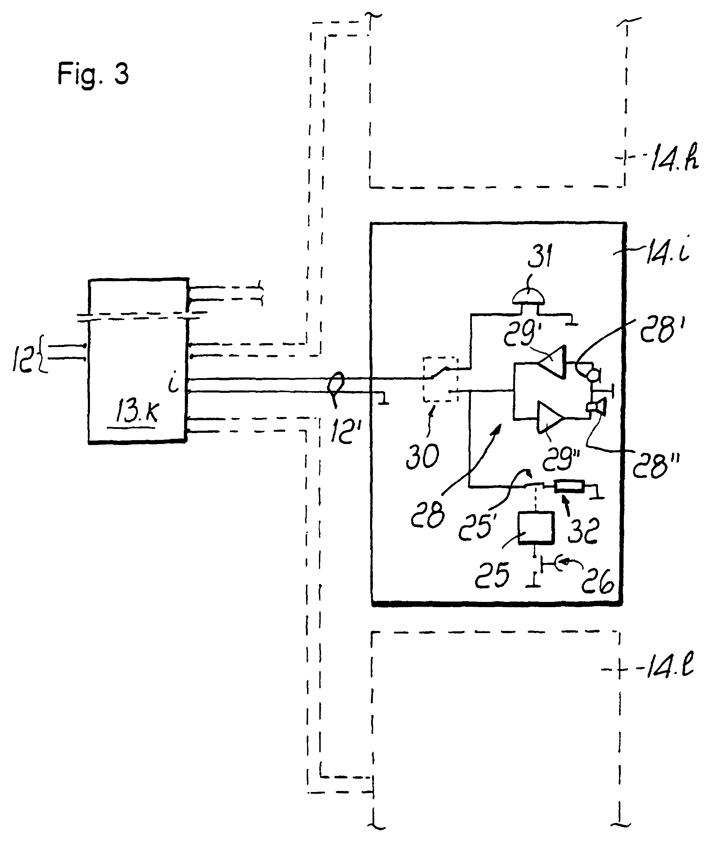

A current probe 24, sensitive to the electrical input produced by the unhooking of a generic intercom set 14, is also connected to the microprocessor µP and is adapted to produce, by means of said microprocessor and a driver 17', the activation of the lock 17 when said electrical input is temporarily interrupted, as specified in greater detail hereinafter, for a preset period τ by a time-controlled relay 25 that is associated with the door opening button 26 provided on each intercom set 14 (figure 3). By means of an interface 27, the microprocessor µP of the outdoor station 11 is parallel-connected to the similar microprocessor of the optional additional outdoor station 11'; the interface 27 is adapted to produce the automatic switching of the two outdoor stations, selectively enabling them for connection to the various intercom sets. A series of LEDs L1 to L5 is furthermore connected to the microprocessor µP to visually indicate operating conditions of the outdoor station and specifically:
L1 - to report the "free" condition
L2 - to report the "call in progress" condition
L3 - to report the "talk" condition
L4 - to report the "busy" condition
L5 - to report the "error" condition

Said figure 2 also illustrates the circuit structure of the junction boxes 13, all of which branch off the common bus 12. Each junction box in turn comprises a microprocessor µPs that is adapted to select the generic intercom set 14.i of the group G.i of intercom sets that are physically connected to said box.

For this purpose, the microprocessor µPs is provided with outputs U1...U8 that are equal to the number of intercom sets, for example eight, that compose said group G.1; each output is operatively connected to the base of a corresponding transistor TR1...TR8 that is adapted to selectively insert a respective intercom set 14.1...14.8 on the bus 12. When the system is in standby, all the microprocessors µPs of the junction boxes 13 are in the stop-mode state; when a call is placed from the outdoor station 11, the selection data, in digital form, switch the microprocessors to the run state, and each microprocessor compares the digital data present on the bus 12 with the encoding data of the respective junction box 13, which are set by means of the DIP switches. Once comparison has occurred, only the microprocessor µPsk of the k-th box involved in the connection remains in the run state, whilst all the others switch off and return to the stop-mode state.

Figure 3 illustrates in detail a generic intercom set 14.i that is part of the group of intercom sets handled by the corresponding generic junction box 13.k.

Said generic intercom set in turn comprises an audio unit 28 with a microphone cartridge 28' and a loudspeaker 28'' that are associated with respective amplifiers 29'-29", a hook contact 30, a call transducer 31 of the high-impedance type, commonly known as "buzzer", the door opening button 26, and the time-controlled relay 25, which engages or disengages a load resistor 32 by means of its contact 25'.

Operation of the described system is as follows:
when the outdoor station sends the call code "PPCC" related to the generic intercom set 14.i, the first two digits enable the junction box 13.k and the second two digits enable the i-th output of said box, connecting the specific intercom set to the bus 12 by means of the respective transistor TRi and the corresponding branch line 12'. When the handset is on-hook, the hook contact 30 connects the buzzer 31 to the line. In these conditions, in view of the high impedance of the buzzer, the intercom set does not absorb current and the microprocessor µP of the outdoor station 11 is notified of the lack of electrical input by the probe 24 and sends, over the bus 12, the call tone that activates the respective buzzer 31. When the handset is lifted off-hook, the hook contact 30 disconnects the buzzer 31 and inserts on the line the audio unit 28 and, by means of the contact 25' in closed position, the load resistor 31. In these conditions, the current probe 24, by detecting the electrical input of current on the part of the intercom set, sends a corresponding signal to the microprocessor µP and said microprocessor stops sending the call tone. Bidirectional audio communication between the outdoor station and the selected intercom set is then established. When the door opening button 26 is operated, the time-controlled relay 25 is energized and opens the contact 25' for a preset time τ, disconnecting the load resistor 32 for a corresponding time.

Said temporary disconnection of the load is detected by the probe 24 and is interpreted by the microprocessor µP of the outdoor station 11 as a door opening command. Accordingly, the microprocessor µP, by means of the driver 17', energizes the electric lock 17. When the handset is placed back on-hook, the load resistor 32 is disconnected from the hook contact 30 for a time T > τ. The microprocessor µP thus distinguishes a hangup from the door opening command and sends a disconnection signal to the previously enabled junction box 13.k.

Without altering the concept of the invention, the details of execution and the embodiments may of course be altered extensively, with respect to what has been described and illustrated by way of non-limitative example, without thereby abandoning the scope of the invention defined in the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A building intercommunication system (10) comprising at least one outdoor station (11) and a plurality of indoor stations or intercom sets (14), wherein the outdoor station includes at least one keyboard (15), for selecting the individual indoor stations, transducers (16) for transceiving the audio signal, and a driver for an electric lock (17), and wherein each intercom set (14) comprises at least one handset, a call transducer or buzzer, and a button (26) for operating the electric lock; and wherein said outdoor station (11) and said intercom sets (14) are connected to each other by means of a line (12-12') having just two wires, **characterized in that** it comprises connected on said line (12-12') junction boxes (13), each said box being connected to a corresponding group (G) of intercom sets (14) by means of respective of said two wire lines (12') which constitute a buffer bidirectional bus for feeding the data related to the intercom set (14) to be selected, the ring tone, the two simultaneously talking/listening audio signals, the control of the electric lock (17); the selection data of each individual intercom set (14.i) being constituted by a four-digit digital numeric code wherein the two first digits identify the junction box (13) with which the selected intercom set is associated and the two second digits indentifying the terminals of the box (13) to which said intercom set is physically connected, and **in that** each junction box comprises a microprocessor (µPs) that is adapted to select the generic intercom set (14.i) of the group (G) of intercom sets that are physically connected to said box, said microprocessor (µPs) of the junction box being provided with outputs (U1...U8) that are equal to the number of intercom sets that compose the group (G) that is associated with said box, and **in that** each output is operatively connected to the base of a corresponding transistor (TR.1...TR.8) adapted to selectively insert, on said bus (12), a respective intercom set (14.1...14.8) of said group.

2. The building intercommunication system according to claim 1, **characterized in that** said outdoor station (11) comprises a microprocessor (µP) that is operatively connected to the selection keyboard (15), and to a first operational amplifier (22), the output whereof is connected to one of the two wires of the bidirectional bus (12), the second wire of said bus being connected to the ground.

3. The system according to claims 1 and 2, **characterized in that** said first amplifier (22) has a first (a) and a second (b) input that respectively are adapted to receive from the microprocessor (µP), on one of the selection data (Tx), which are modulated in an on-off digital form, the ring tone (A.N), a third input (c) of the first amplifier being connected to a microphone cartridge (16') of a transceiver unit (16).

4. The system according to the preceding claims, **characterized in that** the outdoor station (11) also comprises a second amplifier (23) that is adapted to receive the audio signals originating from the selected intercom set and to transmit them amplified to a loudspeaker (16") of the transceiver unit (16).

5. The system according to claims 1 and 2, **characterized in that** said outdoor station (11) also comprises a current probe (24) that is sensitive to the electrical input produced by the lifting off-hook of the handset of a generic intercom set and is adapted to selectively produce, by means of the microprocessor (µP), the activation of the electric lock (17) when said electrical input, as a consequence of the operation of the door opening button (26), is interrupted for a preset period (τ), or the disconnection of the engaged junction box (13) when, by placing the handset back on-hook, the electrical input is interrupted for a time (T) that is longer than said preset period (τ).

6. The system according to claims 1 to 5, **characterized in that** each junction box comprises a plurality of DIP switches for programming the distinctive code of said boxes.

7. The system according to claims 1 and 5, **characterized in that** each intercom set (14) comprises a door opening button (26) that is associated with a time-controlled relay (25) which, if activated when the handset of the intercom set is off-hook, is adapted to disengage a load resistor (32) from said bus (12) for a preset period (τ) for activating the energization of the electric lock (17) of the outdoor station (11).

## Patentansprüche

1. Eine Gegensprechanlage (10) für Gebäude, die wenigstens eine Außenstation (11) und eine Vielzahl von Innenstationen oder Gegensprechgeräten (14) umfasst, worin die Außenstation wenigstens ein Tastenfeld (15) zum Auswählen der individuellen Innenstationen, Sender-Empfänger (16) zum Senden-Empfangen des Audiosignals und einen Treiber für ein elektrisches Schloss (17) einschließt und worin jedes Gegensprechgerät (14) wenigstens ein Handgerät, einen Ruf-Sender-Empfänger oder Summer und einen Druckknopf (26) zum Betreiben des elektrischen Schlosses umfasst; und worin die Außenstation (11) und die Gegensprechgeräte (14) mit Hilfe einer Leitung (12-12') miteinander verbunden sind, die nur zwei Drähte besitzt, **dadurch gekennzeichnet, dass** sie an die Leitung (12-12') angeschlossene Anschlusskästen (13) umfasst, wobei jeder Kasten mit einer entsprechenden Gruppe (G) von Gegensprechgeräten (14) mit Hilfe der jeweiligen der Zweidraht-Leitungen (12') verbunden ist, die einen bidirektionalen Pufferbus zum Einspeisen der mit dem zu wählenden Gegensprechgerät (14) in Beziehung stehenden Daten, des Klingeltons, der zwei gleichzeitigen Sprecher/Zuhörer-Audiosignalen und der Steuerung des elektrischen Schlosses (17) bilden; wobei die Wähldaten jedes einzelnen Gegensprechgeräts (14.i) aus einem vierstelligen digitalen Zahlencode gebildet werden, worin die ersten zwei Stellen den Anschlusskasten (13) identifizieren, mit dem das gewählte Gegensprechgerät verknüpft ist, und die zweiten zwei Stellen die Anschlüsse des Kastens (13) identifizieren, mit dem das Gegensprechgerät physikalisch verbunden ist, und dadurch dass jeder Anschlusskasten einen Mikroprozessor (µPs) umfasst, der so ausgestaltet ist, dass er das generische Gegensprechgerät (14.i) der Gruppe (G) von Gegensprechgeräten wählt, die mit dem Kasten physikalisch verbunden sind, wobei der Mikroprozessor (µPs) des Anschlusskastens mit Ausgängen (U1 ... U8) ausgestattet ist, die der Anzahl von Gegensprechgeräten gleich sind, welche die Gruppe (G) bilden, die mit dem Kasten verknüpft ist, und dadurch dass jeder Ausgang mit der Basis eines entsprechenden Transistors (TR.1 ... TR.8) operativ verbunden ist, der so ausgestaltet ist, dass er selektiv auf dem Bus (12) ein jeweiliges Gegensprechgerät (14.1 ... 14.8) der Gruppe einfügt.

2. Die Gegensprechanlage für Gebäude gemäß Anspruch 1, **dadurch gekennzeichnet, dass** die Außenstation (11) einen Mikroprozessor (µP) umfasst, der mit dem Wähltastenfeld (15) und mit einem ersten Operationsverstärker (22) operativ verbunden ist, wovon der Ausgang mit einem der zwei Drähte des bidirektionalen Busses (12) verbunden ist, wobei der zweite Draht des Busses geerdet ist.

3. Das System gemäß den Ansprüchen 1 und 2, **dadurch gekennzeichnet, dass** der erste Verstärker (22) einen ersten (a) und einen zweiten (b) Eingang besitzt, die jeweils so ausgestaltet sind, dass sie aus dem Mikroprozessor (µP) auf einem der Wähldaten (Tx), die in einer digitalen Ein-Aus-Form moduliert werden, den Klingelton (A.N) empfangen, wobei ein dritter Eingang (c) des ersten Verstärkers mit einem Mikrophoneinsatz (16') einer Sender-Empfänger-Einheit (16) verbunden ist.

4. Das System gemäß den vorhergehenden Ansprüchen, **dadurch gekennzeichnet, dass** die Außenstation (11) ferner einen zweiten Verstärker (23) umfasst, der so ausgestaltet ist, dass er die Audiosignale empfängt, die aus dem gewählten Gegensprechgerät stammen, und dass er sie verstärkt an einen Lautsprecher (16'') der Sender-Empfänger-Einheit (16) sendet.

5. Das System gemäß den Ansprüchen 1 und 2, **dadurch gekennzeichnet, dass** die Außenstation (11) ferner einen StromFühler (24) umfasst, der auf die elektrische Eingabe empfindlich ist, die von dem Abheben des Handgeräts eines generischen Gegensprechgeräts erzeugt wird, und der so ausgestaltet ist, dass er selektiv mit Hilfe des Mikroprozessors (µP) die Aktivierung des elektrischen Schlosses (17), wenn die elektrische Eingabe als eine Folge des Bedienens des Türöffner-Druckknopfs (26) für eine voreingestellte Zeitspanne (τ) unterbrochen wird, oder die Trennung des aktivierten Anschlusskastens (13) erzeugt, wenn durch Auflegen des Handgeräts die elektrische Eingabe für eine Zeit (T) unterbrochen wird, die länger als die voreingestellte Zeitspanne (τ) ist.

6. Das System gemäß den Ansprüchen 1 bis 5, **dadurch gekennzeichnet, dass** jeder Anschlusskasten eine Vielzahl von DIP-Schaltern zum Programmieren des spezifischen Codes der Kästen umfasst.

7. Das System gemäß den Ansprüchen 1 und 5, **dadurch gekennzeichnet, dass** jedes Gegensprechgerät (14) einen Türöffner-Drucknopf (26) umfasst, der mit einem zeitgesteuerten Relais (25) verknüpft ist, das so ausgestaltet ist, dass es einen Lastwiderstand (32) von dem Bus (12) für eine voreingestellte Zeitspanne (τ) zum Aktivieren der Stromversorgung des elektrischen Schlosses (17) der Außenstation (11) deaktiviert, wenn es aktiviert wird während das Handgerät des Gegensprechgeräts abgehoben ist.

## Revendications

1. Système d'intercommunication de bâtiment (10) comprenant au moins un poste extérieur (11) et une pluralité de postes intérieurs ou postes d'intercommunication (14), dans lequel le poste extérieur comprend au moins un clavier (15), pour sélectionner les postes intérieurs individuels, des transducteurs (16) pour émettre et recevoir le signal audio et un dispositif de commande pour un verrou électrique (17), et dans lequel chaque poste d'intercommunication (14) comprend au moins un combiné, un transducteur ou avertisseur d'appel et un bouton (26) pour actionner le verrou électrique ; et dans lequel ledit poste extérieur (11) et lesdits postes d'intercommunication (14) sont connectés les uns aux autres au moyen d'une ligne (12-12') comportant seulement deux fils, **caractérisé en ce qu'**il comprend, connectées à ladite ligne (12-12'), des boîtes de jonction (13), chacune desdites boîtes étant connectée à un groupe correspondant (G) de postes d' intercommunication (14) au moyen de lignes respectives parmi lesdites lignes à deux fils (12') qui constituent un bus bidirectionnel à circuits tampons pour délivrer les données concernant le poste d'intercommunication (14) devant être sélectionné, la tonalité de sonnerie, les deux signaux audio de parole/écoute simultanées, la commande du verrou électrique (117) ; les données de sélection de chaque poste d'intercommunication individuel (14.i) étant constituées par un code numérique digital à quatre chiffres dans lequel les deux premiers chiffres identifient la boîte de jonction (13) à laquelle le poste d'intercommunication sélectionné est associé et les deux derniers chiffres identifient les bornes de la boîte (13) auxquelles ledit poste d'intercommunication est connecté physiquement, et **en ce que** chaque boîte de jonction comprend un microprocesseur (µP) qui est adapté pour sélectionner le poste d'intercommunication générique (14.i) du groupe (G) de postes d'intercommunication qui sont connectés physiquement à ladite boîte, ledit microprocesseur (µP) de la boîte de jonction étant pourvu de sorties (U1 ... U8) dont le nombre est égal à celui de postes d'intercommunication qui composent le groupe (G) qui est associé à ladite boîte, et **en ce que** chaque sortie est connectée en fonctionnement à la base d'un transistor correspondant (TR.1 ... TR.8) adapté pour insérer de manière sélective, sur ledit bus (12), un poste d'intercommunication respectif (14.1 ... 14.8) dudit groupe.

2. Système d'intercommunication de bâtiment selon la revendication 1, **caractérisé en ce que** ledit poste extérieur (11) comprend un microprocesseur (µP) qui est connecté en fonctionnement au clavier de sélection (15) et à un premier amplificateur opérationnel (22), dont la sortie est connectée à l'un des deux fils du bus bidirectionnel (12), le deuxième fil dudit bus étant connecté à la masse.

3. Système selon les revendications 1 et 2, **caractérisé en ce que** ledit premier amplificateur (22) a une première (a) et une deuxième (b) entrées qui sont respectivement adaptées pour recevoir du microprocesseur (µP), dans l'une des données de sélection (Tx), qui sont modulées en une forme numérique à deux états, la tonalité de sonnerie (A.N), une troisième entrée (c) du premier amplificateur étant connectée à une cassette de microphone (16') d'une unité émettrice-réceptrice (16).

4. Système selon les revendications précédentes, **caractérisé en ce que** le poste extérieur (11) comprend également un deuxième amplificateur (23) qui est adapté pour recevoir les signaux audio provenant du poste d'intercommunication sélectionné et pour les transmettre amplifiés à un haut-parleur (16") de l'unité émettrice-réceptrice (16).

5. Système selon les revendications 1 et 2, **caractérisé en ce que** ledit poste extérieur (11) comprend également une sonde de courant (24) qui est sensible à l'entrée électrique produite par le décrochage du combiné d'un poste d'intercommunication générique et qui est adapté pour produire de manière sélective, au moyen du microprocesseur (µP), l'activation du verrou électrique (17) lorsque ladite entrée électrique, en conséquence de l'actionnement du bouton d'ouverture de porte (26), est interrompue pendant une période prédéterminée (τ), ou la déconnexion de la boîte de jonction (13) utilisée lorsque, par le raccrochage du combiné, l'entrée électrique est interrompue pendant un temps (T) qui est plus long que ladite période prédéterminée (τ).

6. Système selon les revendications 1 à 5, **caractérisé en ce que** chaque boîte de jonction comprend une pluralité de commutateurs DIP pour programmer le code distinctif desdites boîtes.

7. Système selon les revendications 1 et 5, **caractérisé en ce que** chaque poste d'intercommunication (14) comprend un bouton d'ouverture de porte (26) qui est associé à un relais temporisé (25) qui, s'il est activé lorsque le combiné du poste d'intercommunication est décroché, est adapté pour retirer une résistance de charge (32) dudit bus (12) pendant une période prédéterminée (τ) pour activer l'alimentation du verrou électrique (17) du poste extérieur (11).
